Europäisches Patentamt

European Patent Office

Office européen des brevets

(19)

(11) Numéro de publication: **0 233 794**
**B1**

(12) **FASCICULE DE BREVET EUROPEEN**

(45) Date de publication du fascicule du brevet:
**22.03.89**

(51) Int. Cl.⁴: **E21B 43/01**, F16L 37/00

(21) Numéro de dépôt: **87400050.8**

(22) Date de dépôt: **12.01.87**

(54) **Dispositif de connexion de lignes associées à un équipement de forage en mer.**

(30) Priorité: **21.01.86 FR 8600788**

(43) Date de publication de la demande:
**26.08.87 Bulletin 87/35**

(45) Mention de la délivrance du brevet:
**22.03.89 Bulletin 89/12**

(84) Etats contractants désignés:
**BE DE ES GB IT NL SE**

(56) Documents cités:
**DE-A- 2 826 183**
**FR-A- 2 543 611**
**US-A- 4 098 333**
**US-A- 4 274 664**
**US-A- 4 423 983**

(73) Titulaire: **FRAMATOME, Tour Fiat 1 place de la Coupole,
F-92400 Courbevoie(FR)**

(72) Inventeur: **Pido, Jean-Claude, 8, impasse des Tennis
Bâtiment P 31, F-71200 Le Creusot(FR)**

(74) Mandataire: **Moncheny, Michel et al, c/o Cabinet
Lavoix 2 Place d'Estienne d'Orves, F-75441 Paris
Cedex 09(FR)**

ACTORUM AG

## Description

L'invention concerne un dispositif de connexion de lignes associées à un équipement de forage en mer comportant une plateforme, une colonne de forage et un ensemble de lignes destinées en particulier à l'alimentation de la tête de puits à la base de la colonne de forage.

Le forage en mer utilise généralement une colonne verticale de forage constituée d'une pluralité de tronçons tubulaires successifs assemblés bout à bout joignant la plateforme de forage flottant sur la surface de la mer à la tête de puits ancrée sur le fond de la mer. La plateforme de forage est donc soumise aux divers mouvements de la mer alors que la tête de puits est immobile. Les oscillations de la plateforme et le pivotement de la colonne de forage par rapport à sa position théorique verticale sont absorbés grâce à des dispositifs à rotule placés à la base de la colonne de forage.

Les mouvements verticaux alternatifs de la plateforme dus à la houle sont absorbés, quant à eux, par le dernier tronçon de la colonne de forage qui est réalisé sous la forme d'un joint télescopique pouvant se déplacer par coulissement sur un tube d'extrémité porté par la plateforme et consituant l'autre partie de l'assemblage télescopique.

Pour les besoins du forage, il est nécessaire de disposer de moyens permettant de commander les différents organes de la tête de puits situés sur le fond de la mer et de fournir l'énergie nécessaire à ces organes pour leur mise en œuvre. Il est également indispensable d'effectuer des mesures au niveau de la tête de puits et pour cela de faire parvenir des sondes ou tout autre appareil de mesure ou de visualisation à la base de la colonne de forage.

On utilise, pour faire parvenir à la tête de puits l'énergie, les signaux de commande ou les moyens de mesure, des lignes constituées par des canalisations ou des câbles susceptibles de transporter un fluide hydraulique ou de l'énergie ou des signaux électriques ou acoustiques. Ces lignes associées à la colonne de forage sont constituées de plusieurs tronçons successifs et d'une partie terminale souple de raccordement reliée à la plateforme. Chacun des tronçons des lignes est fixé à la périphérie d'un tronçon de la colonne de forage et comporte à chacune de ses extrémités des moyens de jonction. Lors de l'assemblage de la colonne de forage, les tronçons de cette colonne étant fixés les uns aux autres successivement, les tronçons des lignes sont également raccordés automatiquement au moment de l'assemblage des tronçons de la colonne. On assure ainsi une continuité de chacune des lignes périphériques entre la plateforme et la base de la colonne de forage.

Les parties terminales des lignes sont reliées, sur la plateforme, aux différents postes d'alimentation en fluide hydraulique ou en énergie électrique et aux autres moyens de commande ou de mesure assurant le contrôle du forage.

A la fin des opérations d'assemblage de la colonne de forage, il est nécessaire d'assurer la connexion de chacun des tronçons supérieurs des lignes fixées au joint télescopique, à la partie terminale souple correspondante reliée à la plateforme.

Pour cela, lorsque tous les tronçons de la colonne de forage ont été assemblés, cette opération se faisant au niveau de la plateforme, puis descendus par l'ouverture de passage réservée dans cette plateforme, le tronçon terminal supérieur constituant le joint télescopique assemblé à l'extrémité supérieure de la colonne de forage est également descendu à travers l'ouverture de passage de la plateforme, jusqu'au moment où sa partie supérieure comportant un moyen d'appui vient reposer sur des moyens d'appui correspondants comportant un anneau porteur fixé sur la plateforme; un opérateur doit alors effectuer la jonction des parties terminales des lignes depuis un endroit situé en-dessous de l'anneau porteur de la plateforme.

Cette opération manuelle nécessite l'intervention de l'opérateur depuis une nacelle suspendue en-dessous de la plateforme et consiste, pour cet opérateur, après s'être saisi des embouts mâles des parties de raccordement, à introduire ces parties mâles dans les parties femelles correspondantes des tronçons portés par le joint télescopique. Il est bien évident que cette opération est complexe, dangereuse et ne peut pas toujours être effectuée dans des conditions assurant une réalisation satisfaisante des connexions.

Le but de l'invention est donc de proposer un dispositif de connexion de lignes associées à un équipement de forage en mer comportant une plateforme, une colonne de forage verticale constituée d'une pluralité de tronçons assemblés bout à bout, le tronçon terminal supérieur constituant un joint télescopique mobile par coulissement sur un tube solidaire de la plateforme et comportant des moyens d'appui destinés à venir reposer sur des moyens d'appui correspondants portés par la plateforme, au travers desquels passe la colonne de forage, et un ensemble de lignes constituées chacune par une canalisation ou un câble formé de plusieurs tronçons successifs et par une partie terminale de raccordement souple fixée sur la plateforme et munie d'un embout de raccordement, les tronçons de chacune des lignes étant fixés chacun sur un tronçon de la colonne de forage et comportant des moyens de jonction à chacune de leurs extrémités, le dispositif de connexion servant à raccorder les parties terminales de raccordement des lignes fixées sur la plateforme, aux tronçons terminaux supérieurs correspondants fixés sur le joint télescopique en fin d'assemblage de la colonne de forage de façon totalement automatique, en une seule opération d'une grande sûreté et d'une grande fiabilité.

Dans ce but, le dispositif comporte: au moins un support relié à la plateforme portant les parties terminales de raccordement des lignes et leurs embouts, monté mobile entre une position de retrait éloignée de la colonne de forage et une position de service permettant la connexion, à proximité de la colonne de forage,

le joint télescopique de la colonne de forage portant les tronçons supérieurs des lignes de façon que leurs moyens de jonction se trouvent en concordance avec les embouts des parties terminales des lignes, lorsque le support est dans sa position de service pour la connexion, à proximité de la colonne de forage.

L'invention est également relative à un dispositif de connexion comportant des moyens d'orientation du support autour d'un axe sensiblement vertical.

Un mode de réalisation préférentiel du dispositif selon l'invention comporte également des moyens de verrouillage pour empêcher la déconnexion des lignes, dans le cas où le poids de la colonne de forage est insuffisant pour assurer à lui seul ce verrouillage.

Afin de bien faire comprendre l'invention, on va maintenant décrire, à titre d'exemple non limitatif, en se référant aux figures jointes en annexe, un mode de réalisation d'un dispositif de connexion suivant l'invention.

Dans ces figures:

– la figure 1 est une vue en élévation avec coupe partielle de la partie supérieure de la colonne de forage, au niveau du joint télescopique et de la partie inférieure de la plateforme;

– la figure 2 est une demi-vue en coupe suivant II–II de la figure 1, montrant le support des connexions dans sa position déverrouillée;

– la figure 3 est une demi-vue en coupe analogue à la figure 2 montrant le support des connexions dans sa position verrouillée sur la colonne de forage;

– la figure 4 est une vue en coupe suivant IV–IV de la figure 2.

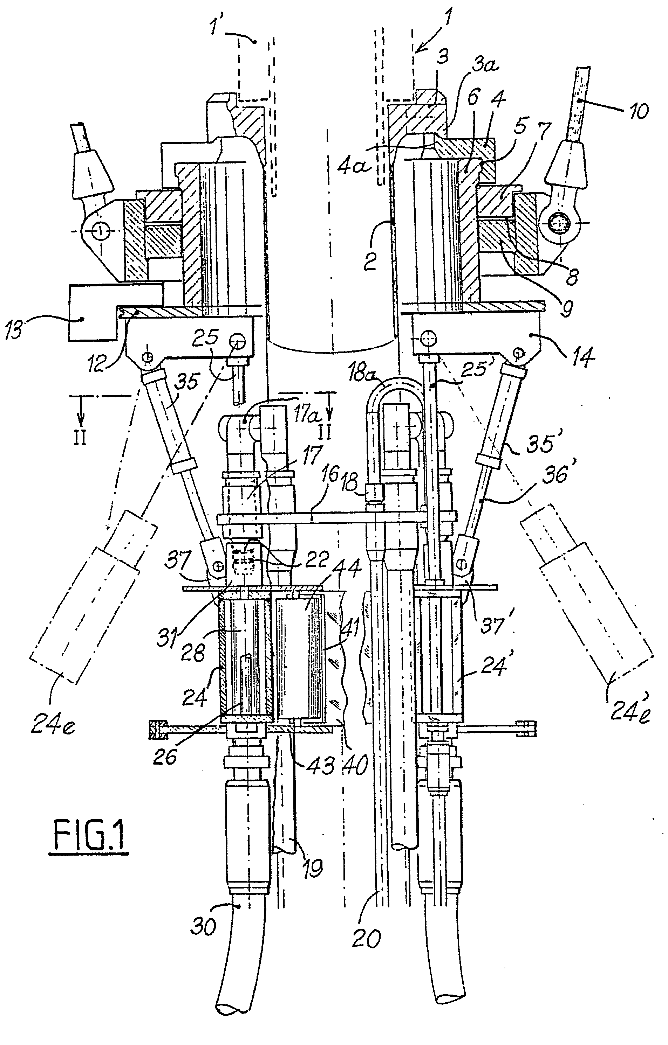

Sur la figure 1, on voit la partie supérieure de la colonne de forage constituée par l'ensemble télescopique 1 comportant une partie tubulaire 1' liée à la plateforme et le joint télescopique 2 proprement dit constituant le tube externe de l'ensemble télescopique 1. Le coulissement du joint télescopique 2 sur la partie tubulaire 1' solidaire de la plateforme permet d'absorber les mouvements de déplacements verticaux relatifs entre la plateforme et la colonne de forage.

Le joint télescopique 2 comporte un renfort terminal 3 soudé à l'extrémité supérieure du tube constituant le joint télescopique 2. Ce renfort 3 constitue le moyen d'appui du tronçon supérieur de la colonne de forage constitué par le joint télescopique 2 sur la plateforme.

Sur la figure 1, on voit le tube télescopique 2 dans sa position basse, en fin d'assemblage de la colonne de forage, ce joint venant en appui par son renfort 3, sur des moyens d'appui correspondant portés par la plateforme.

Ces moyens d'appui portés par la plateforme comportent des mors 4 constituant plusieurs secteurs circulaires à déplacement radial, une pièce d'appui cylindrique 6, un anneau d'appui 7 et un anneau porteur 9 lui-même soutenu par un ensemble de câbles de suspension 10.

Sur la figure 1, le joint télescopique 2 a été représenté en appui sur les moyens d'appui correspondant de la plateforme. Dans cette position, le bord inférieur externe conique 3a du renfort 3 vient en contact avec un bord supérieur également conique 4a de chacun des mors 4, assurant ainsi le centrage et la mise en place du joint télescopique 2 constituant la partie supérieure de la colonne de forage.

Les mors 4 ont été représentés dans leur position resserrée, en avancée vers l'axe de la colonne de serrage. Dans cette position, leur surface interne vient en contact avec un rebord 5 de la pièce d'appui cylindrique 6, ce qui assure leur maintien dans la direction axiale.

Entre l'anneau d'appui 7 et l'anneau porteur 9 est intercalée une couche de fluide hydraulique 8 constituant un coussinet d'appui fluide.

La partie supérieure non représentée de chacun des câbles 10 est reliée à un vérin hydraulique porté par la plateforme et permettant d'une part d'assurer la suspension des moyens d'appui de la plateforme représentée sur la figure 1 et d'autre part d'exercer une traction verticale vers le haut sur la colonne de forage, par l'intermédiaire du joint télescopique 2 pour maintenir la colonne de forage en tension afin d'éviter tout flambage sous l'effet de son poids.

A la partie inférieure de la pièce cylindrique d'appui 6 est fixée par des vis une couronne dentée d'orientation 12 qui engrène avec le pignon de sortie d'un ensemble motoréducteur 13 solidaire de l'anneau porteur 9. Une chape 14 est fixée rigidement sur la surface inférieure de la colonne d'orientation 12.

Une plaque annulaire 16 est soudée sur la surface extérieure du joint télescopique tubulaire 2 et sert de support aux moyens de jonction 17, 18 des tronçons supérieurs 19, 20 des lignes fixées sur le joint télescopique 2. Les moyens de jonction 17 et 18 qui sont vissés sur la plaque 16 comportent une crosse rigide 17a ou 18a respectivement permettant d'orienter vers le bas l'embout de raccordement du moyen de jonction.

On voit sur la figure 1 que l'embout de raccordement 21 du moyen de jonction 17 de la ligne 19 est constitué par une pièce sensiblement cylindrique à axe vertical chanfreinée à son extrémité et comportant deux gorges dans lesquelles sont disposés des joints 22. Cet embout mâle est recouvert d'une couche de chrome dur permettant de limiter son usure.

Il est bien évident que les pièces de jonction des autres lignes et en particulier la pièce de jonction 18 sont réalisées d'une manière analogue.

Les lignes telles que 19 et 20 sont constituées de tronçons successifs liés chacun à un tronçon de la colonne de forage, les tronçons supérieurs de ces lignes visibles sur la figure 1 étant reliés au tronçon supérieur de la colonne de forage constitué par le joint télescopique 2.

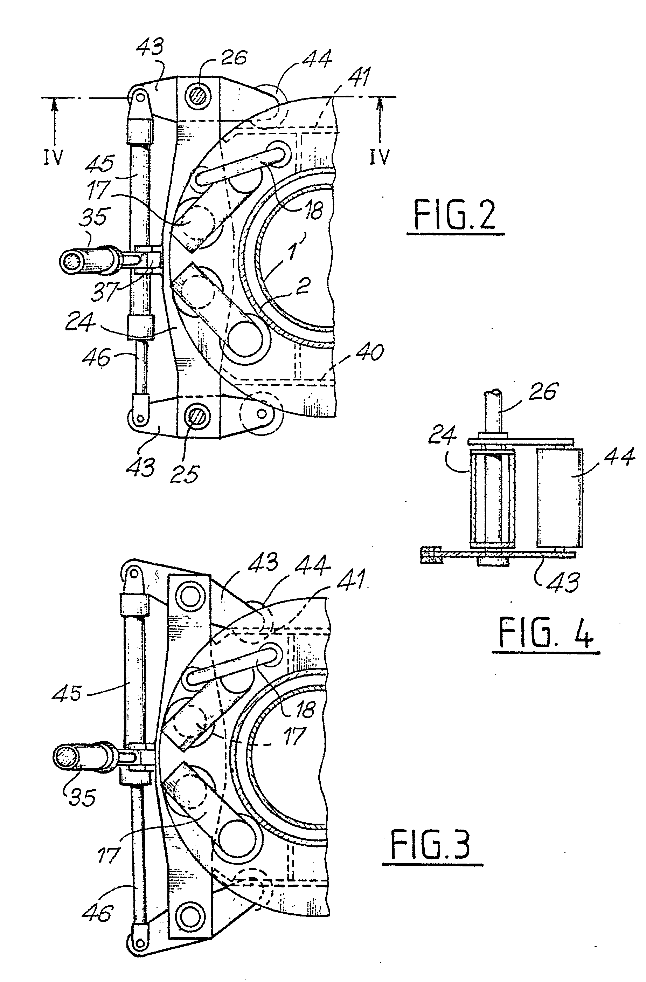

En se reportant à la fois aux figures 1 et 2, on voit que deux poutres horizontales 24 et 24' disposées de part et d'autre de la colonne de forage sont suspendues par l'intermédiaire de tirants 25 et 26 (ou 25' et 26', le tirant 26' n'étant pas représenté), à la chape 14 solidaire de la couronne d'orientation 12 et du cylindre d'appui 6.

Les poutres 24 et 24' à section rectangulaire servent de support aux embouts de raccordement 28 des parties terminales souples 30 des lignes telles que 19. La partie terminale souple 30 de la ligne 19 constituée par une canalisation haute pression est reliée, sur la plateforme, à une source de fluide hydraulique sous pression non représentée. De la même façon, la ligne 20 qui est constituée par un câble électrique comporte une partie terminale souple qui est reliée à une source de courant électrique sur la plateforme de forage.

Les embouts de raccordement des parties terminales souples des lignes tels que 28 sont constitués sous forme d'une douille à axe vertical 31 d'une forme et d'une dimension correspondant à l'embout cylindrique 21 du tronçon supérieur de la ligne 19. La douille 31 à axe vertical constitue ainsi un embout tubulaire femelle pour l'embout cylindrique mâle du moyen de jonction 17.

Les tirants de suspension 25 et 25' des poutres 24 et 24' respectivement sont montés articulés à leur partie supérieure sur la chape 14 et des vérins 35 et 35' sont montés de façon articulée, par l'intermédiaire de leur tige 36 (ou 36') et de leur corps, sur une chape 37 (ou 37') solidaire de la poutre 24 (ou 24') et sur la chape 14 respectivement.

Les vérins 35 et 35' permettent de déplacer les poutres 24 et 24' respectivement, entre leur position représentée en traits pleins sur la figure 1 correspondant à la position de connexion et une position hors service écartée de la colonne de forage représentée en traits mixtes sur la figure 1 (position écartée 24e et 24'e respectivement).

En se reportant à l'ensemble des figures, on va maintenant décrire le dispositif de verrouillage permettant de maintenir les lignes en position connectée quelle que soit la charge appliquée sur ces lignes par l'intermédiaire de la colonne de forage.

Une structure de guidage 40 constituée par des plaques de tôle est soudée sur la surface extérieure du joint télescopique tubulaire 2, dans une position telle que cette structure de guidage 40 soit au niveau des poutres 24 et 24' lorsque le tube télescopique 2 est dans sa position en appui sur les moyens de support de la plateforme, comme représenté sur la figure 1. Cette structure de support 40 comporte quatre lumières telles que 41 dans ses faces latérales.

Nous allons maintenant décrire le dispositif de verrouillage, dans sa partie reliée à la poutre 24 mais il est bien évident qu'un dispositif de verrouillage identique est associé à la poutre 24', pour le verrouillage des lignes portées par cette poutre.

A chacune des extrémités de la poutre 24 est monté librement rotatif autour d'un axe vertical confondu avec l'axe du tirant de suspension correspondant 25 (ou 26), un levier de verrouillage 43 portant à son extrémité dirigée vers la colonne de forage une pièce tubulaire 44 constituant une butée de verrouillage dont la dimension correspond à la dimension de la lumière 41 ménagée dans la structure de guidage 40.

Un vérin 45 est placé entre les deux leviers 43 associés à la poutre 24 et disposés à chacune des extrémités de cette poutre. La tige 46 du vérin 45 est reliée de façon articulée à l'un des leviers 43 alors que le corps du vérin 45 est relié à l'autre levier.

On voit sur la figure 4 que le levier 43 est constitué de deux parties reliées entre elles par l'intermédiaire de la butée tubulaire 44. Le vérin 45 est articulé sur la partie inférieure du levier 43 en deux parties.

Comme il est visible sur les figures 2 et 3, dans la position rétractée du vérin 45 (figure 2), les leviers 43 sont maintenus écartés l'un de l'autre de façon à laisser entre leurs butées d'extrémité 44 un espace transversal suffisant pour permettre le passage de la structure de guidage 40 avec un faible jeu.

Au contraire, dans la position extraite de la tige 46 du vérin 45, comme représenté sur la figure 3, les butées 44 fixées à l'extrémité des leviers 43 sont rapprochées l'une de l'autre de façon à pénétrer dans les lumières 41 des faces latérales de la structure de guidage 40. Cette introduction des butées dans les lumières 41 permet le blocage de la structure 40 et du joint télescopique tubulaire 2 qui lui est fixé par rapport à la poutre 24 (ou par rapport à la poutre 24' en ce qui concerne le second dispositif de verrouillage). On réalise ainsi le verrouillage des connexions des lignes dont une partie est solidaire du joint télescopique 2 et l'autre partie de la poutre 24.

Le dispositif suivant l'invention est mis en œuvre à la fin de l'assemblage de la colonne de forage, les tronçons successifs de cette colonne ayant été assemblés au niveau de la plateforme. Lorsque deux tronçons successifs ont été assemblés par un joint mécanique, l'ensemble de la colonne de forage est descendue par l'ouverture de traversée de la plateforme pour présenter en position d'assemblage l'extrémité du tronçon terminal supérieur. Un tronçon suivant est amené en position d'assemblage, l'assemblage est effectué et la colonne de forage est de nouveau déplacée vers le bas d'une longueur correspondant à la longueur d'un tronçon.

Lorsque l'extrémité supérieure de la colonne de forage est en position au niveau de la plateforme, le tronçon terminal supérieur de la colonne de forage constitué par le joint tubulaire 2 est assemblé à cette extrémité supérieure. Les mors 4 du dispositif d'appui sont en position écartée dans laquelle leur bord interne est aligné avec le bord interne de la pièce d'appui tubulaire 6. Le trou de passage de la colonne de forage correspond alors au diamètre intérieur de la pièce tubulaire d'appui 6, ce qui permet de faire descendre le joint tubulaire 2 dans cette ouverture jusqu'au moment où la plaque 16 portant les moyens de jonction 17 a traversé complètement cette ouverture de la pièce 6.

Pendant cette première phase de la mise en place des connexions de lignes, les poutres 24 et 24' sont dans leurs positions écartées 24e et 24'e dans lesquelles elles libèrent totalement l'espace situé dans le prolongement de l'ouverture de la plateforme. Le mouvement de descente du joint tubulaire télescopique 2 est arrêté lorsque les parties mâles 21 des moyens de jonction 17 se trouvent à une faible distance au-dessus des douilles 31 constituant les embouts de jonction femelles des connexions. Le renfort 3 du joint tubulaire 2 est alors placé un peu au-dessus des mors 4 qui sont dans leur position écartée. L'ensemble de la colonne de forage solidaire du joint tubulaire 2 est alors suspendu à un moyen de levage.

A la fin de cette première phase, on manœuvre les vérins 35 et 35' pour amener les poutres 24 et 24' depuis leur position 24e et 24'e jusqu'à leurs positions 24 et 24' représentées sur la figure 1.

A l'issue de ces déplacements, les embouts femelles 31 sont approximativement à l'aplomb des embouts mâles correspondants 21.

On effectue alors un réglage d'orientation des poutres 24 et 24' pour amener les embouts correspondants en parfait alignement vertical les uns par rapport aux autres; pour celà, on fait tourner la couronne dentée 12 dans un sens ou dans l'autre grâce au motoréducteur 13 en contrôlant visuellement la position des embouts 31 par rapport aux embouts 21 correspondants.

On déplace alors les mors 4 vers l'intérieur de façon à ce qu'ils viennent occuper la position représentée sur la figure 1 où leur surface interne est en appui contre le rebord 5 de la pièce cylindrique d'appui 6.

On fait alors descendre le joint télescopique 2 et la colonne de forage, jusqu'au moment où ce joint télescopique vient reposer sur les mors 4 en position resserrée. Les mors 4 assurent l'appui et le centrage du joint 2 et de la colonne de forage.

Pendant la descente du joint télescopique 2 assurée grâce à un moyen de levage, les embouts mâles 21 des lignes associées à la colonne de forage viennent s'engager dans les embouts femelles 31.

Il est à noter que les embouts femelles 31 des lignes de plus grand diamètre (lignes 19) ont leur bord d'extrémité assurant l'accostage des embouts mâles à un niveau supérieur à celui des embouts femelles des lignes de plus faible diamètre telle que la ligne 20. On réalise ainsi, dans un premier temps, l'accostage des lignes de plus grand diamètre dont les tolérances d'assemblage sont plus larges. Ce premier assemblage permet de réaliser un guidage pour l'engagement des lignes à faible diamètre dont les tolérances d'assemblage sont faibles.

Lors de la deuxième phase du procédé, lorsqu'on déplace les poutres 24 et 24' pour les amener à proximité de la colonne de forage, les leviers 43 et leurs butées d'extrémité 44 coopèrant avec les faces externes de la structure de guidage 40 pour faciliter le positionnement des embouts femelles des parties terminales des lignes par rapport aux embouts mâles solidaires du joint télescopique, comme il est visible sur la figure 2.

Dès que le raccordement est réalisé, le joint télescopique 2 reposant sur les moyens d'appui de la plateforme, le vérin 45 est actionné pour engager les butées 44 dans les lumières 41 de la structure de guidage 40, comme il est visible sur la figure 3. On a alors réalisé, comme indiqué plus haut, le verrouillage des connexions des lignes associées à la poutre 24. L'actionnement du dispositif correspondant associé à la poutre 24' permet le verrouillage des autres lignes.

Ce verrouillage des connexions est particulièrement souhaitable lorsque la colonne de forage est de faible hauteur et donc d'un poids limité, si bien qu'elle exerce un effort relativement faible d'appui sur les connexions.

Il apparaît donc que le dispositif suivant l'invention permet de réaliser la connexion des lignes associées à une colonne de forage, de façon totalement automatique, depuis la plateforme, ce qui augmente considérablement la fiabilité et la sécurité de cette opération délicate.

De plus, le dispositif de verrouillage associé aux moyens de connexion selon l'invention permet d'éviter tout désengagement des connexions en service, quels que soient la hauteur de la colonne de forage et l'état de la mer.

L'invention ne se limite pas au mode de réalisation qui vient d'être décrit.

C'est ainsi qu'on peut imaginer des dispositifs de support des connexions des parties terminales des lignes différents de poutres horizontales reliées à la plateforme de façon à pouvoir pivoter par rapport à celle-ci autour d'un axe horizontal.

On peut également imaginer d'autres moyens pour commander les déplacements de ces supports et d'autres moyens pour en réaliser l'orientation précise.

Le verrouillage des connexions pourrait également être réalisé par d'autres moyens que ceux qui ont été décrits.

Enfin, le procédé et le dispositif suivant l'invention s'appliquent dans tous les équipements de forage en mer comportant une plateforme et une colonne de forage verticale sur laquelle sont disposées des lignes périphériques joignant la plateforme à la tête de puits disposée sur le fond de la mer.

## Revendications

1. Dispositif de connexion de lignes associées à un équipement de forage en mer comportant une plateforme, une colonne de forage verticale constituée d'une pluralité de tronçon assemblés bout à bout, le tronçon terminal supérieur constituant un joint télescopique (2) mobile par coulissement sur un tube (1') solidaire de la plateforme et comportant des moyens d'appui (3) destinés à venir reposer sur des moyens d'appui correspondants (4, 6, 7, 8, 9) portés par la plateforme, au travers desquels passe la colonne de forage,
et un ensemble de lignes (19, 20) constituées chacune par la canalisation ou un câble formé de plusieurs tronçons successifs et par une partie terminale de raccordement (30) souple fixée sur la plateforme et munie d'un embout de raccordement (31),
les tronçons de chacune des lignes (19, 20) étant fixés chacun sur un tronçons de la colonne de forage et comportant des moyens de jonction à chacune de leurs extrémités,
le dispositif de connexion servant à raccorder les parties terminales de raccordement (30) des lignes fixées sur la plateforme, aux tronçons terminaux supérieurs correspondants fixés sur le joint télescopique (2) en fin d'assemblage de la colonne de forage, caractérisé par le fait qu'il comporte: au moins un support (24, 24') relié à la plateforme portant les parties terminales (30) de raccordement des lignes et leurs embouts (31), monté mobile entre une position de retrait éloignée de la colonne de forage et une position de service permettant la connexion, à proximité de la colonne de forage, grâce à au moins deux tirants (25, 26) par lesquels il est suspendu à la plateforme et à un vérin hydraulique (35), le joint télescopique (2) de la colonne de forage portant les tronçons supérieurs des lignes (19, 20) de façon que leurs moyens de jonction (17, 18, 21) se trouvent en concordance avec les embouts (31) des parties terminales (30) des lignes, lorsque le support (24, 24') est dans sa position de service pour la connexion, à proximité de la colonne de forage.

2. Dispositif de connexion suivant la revendication 1, caractérisé par le fait que le support (24, 24') est une poutre sensiblement horizontale montée pivotante autour d'un axe horizontal sur la plateforme.

3. Dispositif de connexion suivant la revendication 1, caractérisé par le fait que le support (24, 24') est relié à une partie (6, 12, 14) de la plateforme montée mobile en rotation autour de l'axe vertical de la colonne de forage grâce à un palier (8) et solidaire d'une couronne dentée (12) en prise avec le pignon de sortie d'un motoréducteur (13) fixé sur la plateforme.

4. Dispositif de connexion suivant la revendications 2, caractérisé par le fait que deux leviers (43) sensiblement horizontaux sont articulés autour d'axes sensiblement verticaux, aux extrémités de la poutre (24, 24'), par leur partie centrale, que ces leviers (43) comportent une butée (44) à l'une de leurs extrémités et sont articulés à leur autre extrémité sur la tige ou le corps d'un vérin (45) joignant les deux leviers (43) et permettant leur actionnement pour rapprocher ou éloigner les butées (44) de la colonne de forage qui comporte des lumières (41) permettant l'engagement des butées (44), pour le verrouillage de la poutre (24, 24') par rapport à la colonne de forage.

5. Dispositif de connexion suivant la revendication 4, caractérisé par le fait que le joint télescopique (2) de la colonne de forage est solidaire d'une structure de guidage (40) dans laquelle sont pratiquées les ouvertures (41) et qui réalise le guidage de la poutre (24) par rapport à la colonne de forage par coopération des butées (44) et des faces extérieures de la structure de guidage (40), lors du déplacement de la poutre (24, 24') entre sa position éloignée et sa position voisine de la colonne de forage.

6. Dispositif de connexion suivant la revendication 1, caractérisé par le fait que l'extrémité supérieure des embouts (31) des parties terminales (30) des lignes à grand diamètre est située à un niveau supérieur à l'extrémité des embouts (31) des lignes à faible diamètre, pour que l'accostage des moyens de jonction (21) avec les embouts (31) soit réalisé en premier lieu, pour les lignes à grand diamètre.

## Claims

1. Device for connecting lines associated with an offshore drilling equipment consisting of a platform, a vertical drilling column consisting of a multitude of sections assembled end-to-end, the upper end section forming a telescopic joint (2) movable by sliding on a tube (1') attached firmly to the platform and comprising supporting means (3) intended to come to rest against corresponding supporting means (4, 6, 7, 8, 9) carried by the platform, through which the drilling column passes, and a set of lines (19, 20) each consisting of a pipe or a cable formed by several successive sections and a flexible joining end part (30) attached to the platform and equipped with a joining piece (31), the sections of each of the lines (19, 20) each being attached to a section of the drilling column and comprising joining means at each of their ends, the connecting device being used for joining the joining end parts (30) of the lines attached to the platform, to the corresponding upper end sections attached to the telescopic joint (2) at the end of assembling the drilling column, wherein it consists of:

at least one support (24, 24') connected to the platform carrying the joining end parts (30) of the lines and their joining pieces (31) mounted movably between a position of withdrawal away from the drilling column and an operating position which enables the connection to be made, near the drilling column, by means of at least two tie rods (25, 26) by which it is hinged to the platform and to a hydraulic jack (35), the telescopic joint (2) of the drilling column carrying the upper sections of the lines (19, 20) so that their joining means (17, 18, 21) are in concordance with the joining pieces (31) of the end parts (30) of the lines, when the support (24, 24') is in its operating position for the connection to be made, near the drilling column.

2. Connecting device as claimed in claim 1, wherein the support (24, 24') is a substantially horizontal girder mounted swiveling around a horizontal axis of the platform.

3. Connecting device as claimed in claim 1, wherein the support (24, 24') is connected to a part (6, 12, 14) of the platform mounted movably in rotation around the vertical axis of the drilling column by means of a bearing (8) and attached firmly to an annular gear (12) engaged into the output gear of a geared motor (13) attached to the platform.

4. Connecting device as claimed in claim 2, wherein two substantially horizontal levers (43) are articulated around substantially vertical axes, to the ends of the girder (24, 24'), by their central part, wherein these levers (43) comprise a stop (44) at one of their ends and are articulated at their other end to the rod or the body of a jack (45) joining the two levers (43) and making it possible to actuate them in order to move the stops (44) closer to or away from the drilling column which comprises ports (41) allowing the engagement of the stops (44), for locking the girder (24, 24') relative to the drilling column.

5. Connecting device as claimed in claim 4, wherein the telescopic joint (2) of the drilling column is attached firmly to a guiding structure (40) in which the openings (41) are provided and which carries out the guiding of the girder (24) relative to the drilling column by the co-operation of the stops (44) and the outer faces of the guiding structure (40), during the movement of the girder (24, 24') between its position away from the drilling column and its position close to the drilling column.

6. Connecting device as claimed in claim 1, wherein the upper end of the joining pieces (31) of the end parts (30) of the lines with large diameter is located at a level above the end of the end pieces (31) of the lines with small diameter, so that the positioning alongside of the joining means (21) with the joining pieces (31) is first carried out for the lines with large diameter.

**Patentansprüche**

1. Vorrichtung zur Verbindung von Hilfsleitungen an einer Unterwasserbohreinheit mit einer Plattform, einer vertikalen Bohrsäule, die aus einer Mehrzahl von hintereinander angeordneten Teilstücken gebildet ist, wobei das obere Endteilstück ein teleskopartiges Verbindungsstück (2) bildet, das durch Gleiten auf einem Rohr (1') bewegbar ist, das einstückig mit der Plattform ausgebildet ist und Anschlagmittel (3) aufweist, die dazu bestimmt sind, sich auf entsprechenden Anschlagmitteln (4, 6, 7, 8, 9) abzustützen, die durch die Plattform getragen werden, durch die sich die Bohrsäule erstreckt, und mit einer Leitungsanordnung (19, 20), welche jede durch einen Kanal oder ein Kabel, das aus einer Mehrzahl von aufeinanderfolgenden Teilstücken gebildet ist, und durch einen biegsamen Verbindungsherstellungsendbereich (30) gebildet ist, der an der Plattform befestigt und mit einem Verbindungsansatzstück (31) versehen ist, wobei die Teilstücke einer jeden der Leitungen (19, 20) jedes auf einem Teilstück der Bohrsäule befestigt ist und Verbindungsmittel an jedem ihrer Enden aufweisen, die Verbindungsvorrichtung zum Verbinden der Verbindungsherstellungsendbereiche (30) der an der Plattform befestigten Leitungen mit den entsprechenden oberen Endteilstücken dient, die an dem teleskopartigen Verbindungsstück (2) am Ende der Zusammensetzung der Bohrsäule befestigt sind, dadurch gekennzeichnet, daß sie aufweist: wenigstens eine mit der Plattform verbundene Stütze (24, 24'), die die Verbindungsherstellungsendbereiche (30) der Leitungen und ihrer Ansatzstücke (31) trägt, wobei sie beweglich zwischen einer Rückzugsstellung entfernt von der Bohrsäule und einer Betriebsstellung, die die Verbindung erlaubt, angeordnet ist, in der Nähe der Bohrsäule, durch wenigstens zwei Zugstangen (25, 26), durch die sie an der Plattform und an einem hydraulischen Zylinder (35) angehängt ist, wobei das teleskopartige Verbindungsstück (2) der Bohrsäule die oberen Teilstücke der Leitungen (19, 20) derart trägt, daß ihre Verbindungsmittel (17, 18, 21) in Übereinstimmung mit den Ansatzstücken (31) der Endbereiche (30) der Leitungen sich befinden wenn sich die Stütze (24, 24) in ihrer Betriebsstellung für die Verbindung in der Nähe der Bohrsäule befindet.

2. Verbindungsvorrichtung nach Anspruch 1, dadurch gekennzeichnet, daß die Stütze (24, 24') ein im wesentlichen horizontaler Träger ist, der schwenkbar um eine horizontale Achse an der Plattform angeordnet ist.

3. Verbindungsvorrichtung nach Anspruch 1, dadurch gekennzeichnet, daß die Stütze (24, 24') mit einem Bereich (6, 12, 14) der Plattform verbunden ist, der drehbeweglich um die vertikale Achse der Bohrsäule mittels eines Lagers (8) angeordnet und einstückig mit einem Zahnkranz (12) in Eingriff mit dem Ausgangsritzel eines Getriebemotors (13) ausgebildet ist, der auf der Plattform angeordnet ist.

4. Verbindungsvorrichtung nach Anspruch 2, dadurch gekennzeichnet, daß zwei im wesentlichen horizontale Hebel (43) um im wesentlichen vertikale Achsen an den Enden des Trägers (24, 24') durch ihren Mittenbereich geschwenkt werden, daß diese Hebel (43) einen Anschlag (44) an einem ihrer Enden aufweisen und an ihrem anderen Ende an der Stange oder dem Gehäuse eines Zylinders (45) geschwenkt werden, der die beiden Hebel (43) verbindet und ihre Betätigung erlaubt, um die Anschläge (44) an die Bohrsäule heranzuführen oder von ihr wegzuführen, die Öffnungen (41) aufweist, die die Anlage der Anschläge (44) erlaubt, zur Verriegelung des Trägers (24, 24') bezüglich der Bohrsäule.

5. Verbindungsvorrichtung nach Anspruch 4, dadurch gekennzeichnet, daß das teleskopartige Verbindungsstück (2) der Bohrsäule einstückig mit einem Führungsaufbau (40) verbunden ist, in dem die Öffnungen (41) ausgebildet sind, und der die Führung des Trägers (24) bezüglich der Bohrsäule durch Zusammenwirken der Anschläge (44) und der Außenseiten des Führungsaufbaus (40) bei der Bewegung des Trägers (24, 24') zwischen seiner entfernten Stellung und seiner Nachbarstellung zur Bohrsäule verwirklicht.

6. Verbindungsvorrichtung nach Anspruch 1, dadurch gekennzeichnet, daß das obere Ende der Ansatzstücke (31) der Endbereiche (30) der Leitungen mit großem Durchmesser sich oberhalb des Endes der Ansatzstücke (31) der Leitungen mit geringem Durchmesser befindet, damit das Ankoppeln der Verbindungsmittel (21) mit den Ansatzstücken (31) vorrangig für die Leitungen mit großem Durchmesser vornehmbar ist.

FIG.1

FIG.2

FIG. 4

FIG.3